# EUROPEAN PATENT APPLICATION

(11) **EP 2 692 420 A1**
(43) Date of publication of application: **05.02.2014**
(21) Application number: 12178860.8
(22) Date of filing: 01.08.2012
(51) Int. Cl.: B01D 69/12, B01D 69/14, B01D 71/32, C01B 3/50, B01D 67/00

(54) **Process for the manufacture of membranes for the purification of hydrogen**

(71) Applicant: SOLVAY SA, 1120 Bruxelles (BE)
(72) Inventor: Denisov, Evgeny, 20159 Milan (MI) (IT); Vicino, Davide, 21042 Caronno Pertusella (VA) (IT); Avataneo, Marco, 20030 Senago (MI) (IT)
(74) Representative: Vande Gucht, Anne

(57) **Abstract**

A process for the manufacture of a membrane suitable for the purification of hydrogen, said membrane comprising at least one proton-conducting polymer and at least one electron-conducting additive comprising a step of ultrasonic treatment and/or high speed mechanical agitation.

## Description

The present invention relates to a process for the manufacture of membranes suitable for the concentration or purification of hydrogen and to membranes obtainable thereby.

Hydrogen is an industrial chemical widely used in many commercial processes. In many of these applications the requirement exists that the hydrogen supplied to contain only low levels of impurities.

Industrial hydrogen is frequently manufactured in a steam reformer in which a gaseous fuel is mixed with steam and passed over a catalyst to produce a stream containing hydrogen, carbon dioxide, carbon monoxide and water, which requires purification prior to the use of the hydrogen. Several methods for separating hydrogen from the impurities of a reformer product stream have been described in the prior art. Frequently, permeable membranes manufactured from either a polymer or from a metallic combination have been used in such processes.

The polymeric membranes rely on differences in the relative diffusivities of the gaseous molecules through the membrane to achieve the desired separation. However, the hydrogen selectivity is not fully satisfactory. Metallic membranes provide excellent hydrogen selectivity because they transport hydrogen in its atomic state rather than its molecular state. However, the materials necessary for the manufacture of such membranes are not readily available and expensive and thus those membranes are commercially not feasible for most hydrogen purification applications.

US A 4 911 803 relates to a composite hydrogen purification membrane for use in purifying a gas containing hydrogen and gaseous impurities where the membrane comprises an anode for oxidizing the hydrogen to form protons and electrons, a cathode for reducing the protons and electrons to form hydrogen, a proton conductor means disposed between and in contact with the anode and the cathode for conducting the protons to the cathode, and an electron conductor means connecting said anode to said cathode for conducting the electrons to the cathode, a partial pressure differential between the anode and the cathode providing the driving force for the oxidation and reduction without having an external current source.

The hydrogen separation mechanism of the membranes described is based on the transport of hydrogen in ionized state whereas all other molecules are only transported through the membrane by diffusion.

For performing the separation, the gas containing hydrogen and gaseous impurities is supplied to the anode, where a catalyst oxidizes the hydrogen contained in the gas to protons and electrons. The protons are conducted through the proton conductor means to the cathode, while the electrons are conducted to the electron conductor means to the cathode. At the cathode, protons and electrons recombine in a catalytically promoted reduction reaction to produce hydrogen molecules. The hydrogen is then removed from the cathode.

Whereas the membranes disclosed in US A 4 911 803 show an improvement over those membranes based exclusively on differences in diffusivity through membranes, the overall properties in terms of hydrogen flux through the membrane combined with excellent selectivity towards hydrogen are still not fully satisfactory.

It is thus an object of the present invention to provide an improved process for the manufacture of conducting membranes suitable for the purification of hydrogen showing excellent selectivity combined with good hydrogen flux to achieve reasonable throughputs.

This object has been achieved with the process in accordance with claim one. Accordingly the present invention provides a process for the manufacture of a membrane suitable for the purification of hydrogen, said membrane comprising at least one proton-conducting polymer and at least one electron-conducting additive, wherein :
- a first dispersion comprising a liquid dispersing medium and, dispersed therein, the proton-conducting polymer, is provided,
- the electron-conducting additive is provided,
- the first dispersion and the electron-conducting additive are mixed together,
- the first dispersion and the electron-conducting additive, while being mixed together and/or after having been mixed together, is/are subjected to at least one treatment chosen from an ultrasonic treatment and a high-speed mechanical agitation, so as to prepare a second dispersion comprising the liquid dispersing medium and, dispersed therein, the proton-conducting polymer and the electron-conducting additive, then
- the second dispersion is formed into the membrane upon removal of the liquid dispersing medium.

The invented process can also be viewed as a process for the manufacture of membranes suitable for the purification of hydrogen, said membranes based on proton-conducting polymers and electron-conducting additives, wherein a proton-conducting polymeric dispersion and an electron-conducting additive are provided and mixed wherein the system either during mixing of the components or thereafter is subjected to an ultrasonic treatment or to a high-speed mechanical agitation and thereafter the product thus obtained is formed into a membrane.

Further embodiments of the present invention relate to membranes as obtained by the process in accordance with the present invention and to the use of such membranes for the purification of hydrogen in hydrogen containing gas mixtures.

In accordance with one embodiment of the process of the present invention a proton-conducting polymeric dispersion and an electron-conducting additive are subjected to an ultrasonic treatment or to a high-intensity mechanical agitation treatment while they are mixed. The ultrasonic treatment or the mechanical agitation treatment is believed to improve the homogeneity of the distribution of the electron-conducting additive in the proton-conducting dispersion which results in an improved electron conductivity of the final membrane compared to membranes obtained from the same starting materials without ultrasonic or high intensity mechanical agitation treatment

In accordance with another embodiment of the process of the present invention, the proton-conducting polymeric dispersion and the electron-conducting additive are first mixed by conventional mixing (not including ultrasonic treatment or high intensity mechanical agitation) and thereafter subjected to ultrasonic treatment or high intensity mechanical agitation. Ultrasonic treatment and high intensity mechanical agitation treatment support the uniform distribution of the electron-conducting additive in the proton-conducting polymeric dispersion.

Mixing is generally referred to as a process of combining different materials to produce a more or less homogeneous product. The quality of the final product and its properties are usually dependent on the quality of the mixture process; improper mixing results in a non-homogeneous product that lacks consistency with respect to desired attributes. In conventional mixing the mixing energies introduced into the system normally do not lead to a change in particle size distribution or related parameters but simply intermix two components without affecting their morphology.

Mixing equipments are often classified based on the type of materials be mixed. Blenders are mixers for blending mixtures of solid components, whereas agitators are commonly used for liquid-liquid or liquid-gas mixing. In accordance with the process of the present invention, ultrasonic or high-intensity mechanical agitation treatment is used. Contrary to conventional mixing, these treatments result in a modification of the physical and/or chemical properties of the components of the system. Thus, particle size of a component to be dispersed in a matrix may be changed or interactions between the components of the system may be initiated. Ultrasonic treatment and high intensity mechanical agitation are accompanied with the introduction of high amounts of power into the system sufficient to modify or influence at least one product parameter of the system or its components. In the present case, ultrasonic treatment or high-intensity mechanical agitation is believed to lead to a change in the particle size of the electron-conducting additive as such or to a change in the particle size of the agglomerates of proton-conducting polymer and electron-conducting additive, thereby positively influencing the hydrogen purification efficiency of a membrane formed after the treatment.

Without being bound to any theory it appears reasonable to assume that the ultrasonic treatment or the high-intensity mechanical agitation treatment in accordance with the process of the present invention will support the formation of a percolation network of the electron-conducting additive in the proton-conducting polymer which is believed to have a positive influence on the efficiency of the membrane for the purification of hydrogen.

Devices for ultrasonic treatment are commercially available in a great variety and the skilled person will select the best suitable device for the individual situation based on his knowledge. Ultrasonic bath type equipment may be suitable and preferably ultrasonic tip devices may be used which achieve a higher energy input for a given volume in the vicinity of the ultrasonic point. Furthermore, by using ultrasonic tip devices, the volume subjected to the treatment can be more precisely controlled compared to an ultrasonic bath where a homogeneous amount of energy is introduced over the entire sample volume. By using ultrasonic tip devices, the point of impact of the mixing energy can be confined and precisely directed to the location where such energy is desired to improve the purification efficiency of the membrane.

High intensity mechanical agitation may be obtained by subjecting the system of dispersion and additive to the action of a stirring device like an impeller or by subjecting the mixture to vibration or similar action thus introducing sufficient energy into the system to achieve the desired modifications in morphology and properties.

Without being bound to specific geometries of a stirring device it can be generally said that the speed of rotation of the stirrer necessary to achieve the modification of the properties of the system will depend on the diameter of the stirrer; the energy introduced increases with increasing diameter of the stirrer and thus a higher stirrer can be operated at lower speed while still achieving the necessary input of energy.

The nature of the mixing step in the process in accordance with the present invention is preferably intensive (or dispersive) in character. Intensive mixing, for the purposes of the present invention describes a multitude of processes in which some intrinsic change takes place in the physical character of one or more components during processing. Extensive mixing processes where composition uniformity is generated by the imposition of large strains through various types of deformation are in principle suitable, but not particularly preferred. For efficient extensive mixing the initial orientation of the phases and subsequent orientation of the interface between the phases are important parameters to improve the efficiency of the process.

The mixing of solid additives into a liquid or molten matrix often involves intrinsic changes in the shape and size distributions of the solid particulates take place. These effects are generally observed when internal stresses, commonly induced by viscous drag on the particles exceed a certain threshold value, which threshold depends on the composition and morphology of the dispersion.

Whereas the amount of strain or energy needed to achieve the desired change in morphology or physical or chemical parameters depends on the composition, in a number of cases strains characterized by shear rates of 15 000 per second or more have proved to be suitable for high speed mechanical agitation. Ultrasonic treatment due to the induction of motion in the system also induces shear effects in the dispersion and again, shear rates as mentioned above may be mentioned as suitable.

It is important to note, however, that any shear rate is suitable as long as the desired changes in morphology or chemical and physical properties are achieved.

Mixing devices suitable for manufacturing the membranes in accordance with the process of the present invention are described in the literature and known to the skilled person. Depending on the actual conditions of the system comprising dispersion and the additive to be mixed, the skilled person will select an appropriate mixing device and an appropriate process introducing the adequate amount of mixing energy into the system to avoid on one hand mechanical disruption of the components but on the other hand to achieve the desired degree of improvement. Thus, detailed disclosures relating to the suitable mixing devices are not necessary here and reference is made to the respective prior art at this point.

Preferred proton-conducting dispersions useful for the process of the present invention may preferably comprise fluorine containing polymers and even more preferably are based on fluorine containing polymers as essential component. One preferred group of such conducting fluorine containing polymers are fluorinated polymers having a polyperfluoro backbone with side chains comprising sulfonic or carboxylic acid groups. Generally, a dispersion is a system comprising a first continuous phase forming a matrix wherein a second phase, the so called dispersed phase is distributed.

In the course of the present invention, the proton-conducting dispersions are preferably liquid dispersions wherein a liquid substance or a mixture of liquid substances forms the continuous phase or the matrix (herein referred to as the liquid dispersing medium) and wherein a proton-conducting material, preferably a fluorine containing polymer is contained as dispersed phase.

The skilled person will select, based on the specific circumstances of the composition, the liquid substance or the liquid substance combination for the dispersion. In case of fluorine containing polymers, polar liquids like water or alcohols like C₁ to C₄ aliphatic alcohols (methanol, ethanol, n- or i-propanol or the various isomeric butanols) have proven to be advantageous under certain circumstances for the process in accordance with the present invention. The liquid dispersing medium can include, can consist essentially of, or can consist of water. Alternatively, mixtures including, consisting essentially of, or consisting of water and of one or more alcohols (in particular, C₁ to C₄ aliphatic alcohols) are also suitable for use as the liquid dispersing medium. The water content of the liquid dispersing medium is preferably of at least 35 weight percent, more preferably of at least 50 weight percent, based on the total weight of the liquid dispersing medium. When one or more alcohols are contained in the liquid dispersing medium, the total alcohol content of said liquid dispersing medium is preferably of at least 25 wt%, more preferably of at least 40 wt%, based on the total weight the liquid dispersing medium; besides, the total alcohol content of said liquid dispersing medium is preferably of at most 65 wt% and more preferably of at most 50 wt% based on the total weight of the liquid dispersing medium. In certain preferred embodiments, the liquid dispersing medium contains water and at least two different alcohols, in particular at least one linear aliphatic alcohol and at least branched aliphatic alcohol, each of the two different alcohols being preferably in an amount of at least 5 wt. % based on the total weight of the liquid dispersing medium; thus, good results were obtained with liquid dispersing media comprising, consisting essentially of or composed of at least 45 wt. % water, at least 30 wt. % isopropanol and at least 5 wt. % n-propanol. In certain particular embodiments, the liquid dispersing medium comprises, consists essentially of or consists of : (i) water and/or one or more alcohols, and (ii) from 1 wt% to 25 wt%, based on the total weight of the liquid dispersing medium, of at least one trialkylphosphate, the three alkyl groups of the trialkylphosphate comprising generally from 1 to 6 carbon atoms; trialkyphosphates, in particular triethylphosphate, may notably help in protecting the sulfonate groups of proton-conducting polymers bearing sulfonate groups from thermal degradation during exposure of membranes to elevated temperatures (≥ 190°C); the trialkylphosphate amount, based on the total amount of the liquid dispersing medium, preferably does not exceed 15 wt %, and ranges more preferably from 2.5 to 10 wt%, based on the total weight of the liquid dispersing medium.

It has to be emphasized at this point that the liquid dispersing medium useful in the process of the present invention can be based on any suitable liquid substance or combination of liquid substances capable of obtaining stable dispersions of the proton-conducting polymers, wherein the dispersions are stable at least for the time needed to allow for the further processing into the membranes. Furthermore, it has to taken into account that the ultrasonic treatment or the high speed mechanical agitation may lead to an increase in temperature in which case it is advantageous to use a liquid dispersing medium with a boiling point exceeding the mixing temperature reached to avoid premature evaporation. In general, liquid substances or combinations of liquid substances having boiling points of at least 50 °C at atmospheric pressure are preferred.

It is also advantageous to keep the boiling point within a certain range not exceeding an upper limit, especially if the membranes are formed by casting, in which case substances contained in the liquid dispersing medium should evaporate under atmospheric pressure within a reasonable period of time to form the membrane.

The person skilled in the art will select the appropriate liquid dispersing medium based on the aforementioned criteria and the specific circumstances to obtain the best results.

The proton-conducting polymers suitable for use in the process in accordance with the present invention are preferably sulfonic ionomers having an equivalent weight in the range of form 380 to 1800 g/eq. They are preferably derived from the copolymerization of one or more fluorinated monomers (A) containing at least one ethylenic unsaturation with fluorinated monomers B containing sulfonyl groups -SO₂F and subsequent conversion of the sulfonyl group to the sulfonic acid group SO₃H.

Preferred monomers A are vinylidene fluoride (VDF), C₂-C₈ perfluoroolefins, preferably tetrafluoroethylene (TFE), C₂-C₈ chloro- and/or bromo- and/or iodo-fluoroolefins, such as chlorotrifluoroethylene (CTFE) and bromotrifluoroethylene, CF₂=CFOR₁₁ (per)-fluoroalkylvinylethers (PAVE), wherein R₁₁ is a C₁-C₆ (per)fluoroalkyl, for example trifluoromethyl, bromodifluoromethyl or pentafluoropropyl, or CF₂=CFOX perfluoro-oxyalkylvinylethers, wherein X is a C₁-C₁₂ perfluoro-oxyalkyl having one or more ether groups, for example perfluoro-2-propoxy-propyl.

The fluorinated monomers B are preferably selected from compounds of the formulae 1 to 4 below

F₂C=CF-O-CF₂-CF₂-SO₂F (1)

F₂C=CF-O[CF₂-CX_{A}F-O]_{nA}-(CF2)_{nB}-SO₂F (2)

F₂C=CF-O(CF₂)p-SO₂F (3)

F₂C=CF-Ar-SO₂F (4)

wherein p is an integer of from 3 to 5, X_{A} is Cl, F or CF₃, n_{A} is an integer of from 1 to 10 and n_{B} is 2 or 3.

One group of suitable proton-conducting polymers for the dispersions is available under the tradename Nafion^{®}. Nafion^{®} is a sulfonated tetrafluoroethylene based fluoropolymer-copolymer having incorporated two or more perfluorovinyl ether groups terminated with sulfonate groups onto a tetrafluoroethylene backbone. Protons on the SO₃H (sulfonic acid) groups "hop" from one acid site to another. Pores allow movement of cations but membranes formed from Nafion^{®} alone do not conduct anions or electrons. Nafion^{®} grades are commercially available with various cationic conductivities from DuPont.

Another group of particularly preferred proton-conducting polymers are perfluoro sulfonic acid polymers available under the tradename Aquivion^{®} from Solvay Specialty Polymers Italy S.p.A. ; Aquivion^{®} PFSA dispersions are based on a Short Side Chain (SSC) copolymer of tetrafluoroethylene and a sulfonyl fluoride vinyl ether (SFVE) F₂C=CF-O-CF₂CF₂-SO₂F of low molecular weight.

The Aquivion^{®} PFSA ionomers are copolymers produced from tetrafluoroethylene, C₂F₄, and ethanesulfonyl- fluoride, 1,1,2,2_tetrafluoro-2-[(trifluoroethenyl)-oxy], C₂F₃-O-(CF₂)₂-SO₂F. The section between the ether bridge and the functional unit SO₂F is typically called the "side chain".

The characteristic of Aquivion^{®} PFSA to have a very short and low-weight side chain incurs a number of advantageous factors for the end user. The co-monomer content typically varies between 10 and 30, preferably between 12 and 25 and especially preferably between 15.0 and 17.5 %-mole in the equivalent weight (EW) range of from 500 to 1500 g/eq, preferably of from 700-950 g/eq and particularly preferably of from 770 to 850 g/eq.

For the purposes of this invention, the equivalent weight is defined as the weight of polymer in acid form needed to neutralize one equivalent of sodium hydroxide. Accordingly, higher equivalent weight means that there are fewer active ionic species present.

Further details concerning structure and properties of suitable Aquivion^{®} ionomers are given in WO 2008/077894 and EP 1589062 and in a publication to Ghielmi et al. in Journal of Power Sources 145(2005), 108-115 the contents of which are incorporated herein by reference.

Suitable ionomer products derived from monomers of formula 3 are available from 3M.

The content of the proton-conducting polymer in the first dispersion can vary over a wide range. It can be of at least 1 wt%, at least 2 wt%, at least 5 wt% or at least 10 wt%, the wt% being either based on the combined weight of the proton-conducting polymer and the liquid dispersing medium or on the total weight of the first dispersion. Besides, it can be of at most 60 wt%, at most 50 wt%, at most 35 wt%, at most 25 wt%, at most 20 wt% or at most 15 wt%, the wt% being either based on the combined weight of the proton-conducting polymer and the liquid dispersing medium or on the total weight of the first dispersion. The content of the proton-conducting polymer in the first dispersion is preferably of from 2 to 50 wt%, more preferably of from 3 to 35 wt%, still more preferably of from 5 to 25 wt% and even more preferably of from 10 to 20 wt%, the wt% being either based on the combined weight of the proton-conducting polymer and the liquid dispersing medium or on the total weight of the first dispersion.

The electron-conducting additive may principally be selected from any type of product providing a sufficient electron conductivity for the purpose to be achieved. For economical reasons carbon black, graphite and/or graphene materials and derivatives thereof are preferred. In certain particular embodiments to which the preference may be given, the electron-conducting additive includes, consists essentially of or consists of carbon black and nano-graphene platelets; the case being, the weight of nano-graphene platelets, based on the combined weight of carbon black and nano-graphene platelets, may range from 10 to 90% or from 30 to 70 %.

Carbon black and graphite are commercially available in a great number of varieties differing in surface area, density, molecular structure and other parameters. Generally any type of carbon black or graphite provides the required conductivity and may thus be used.

Graphene itself is usually considered as a one-atom thick planar sheet of sp2-bonded carbon atoms that are densely packed in a honeycomb structure. The name graphene is derived from graphite and the suffix -ene. Graphite itself consists of a high number of graphene sheets stacked together.

Graphite, carbon nanotubes, fullerenes and graphene share the same basic structural arrangement of their constituent atoms. Each structure begins with six carbon atoms, tightly bound together chemically in the shape of a regular hexagon - an aromatic structure similar to what is generally referred to as benzene.

Perfect graphenes consist exclusively of hexagonal cells; pentagonal and heptagonal cells constitute defects in the structure. If an isolated pentagonal cell is present, the plane warps into a cone shape and the insertion of 12 pentagons would create a fullerene.

At the next level of organization is graphene itself, a large assembly of benzene rings in a basically planar sheet of hexagons that resembles chicken wire. The other graphitic forms are built up out of graphene. Buckyballs and the many other non-tubular fullerenes can be thought of as graphene sheets wrapped up into atomic-scale spheres, elongated spheroids and the like. Carbon nanotubes are essentially graphene sheets rolled into minute cylinders. And finally, graphite is a thick, three-dimensional stack of graphene sheets; the sheets are held together by weak, attractive intermolecular forces (van der Waals forces). The feeble coupling between graphite sheets enables graphite to be broken up into miniscule wafers.

In the chemical literature graphene was defined officially in 1994 by the IUPAC (Boehm et al., Pure an Appl. Chemistry 66, 1893-1901 (1994)) as follows:

A single carbon layer of the graphitic structure can be considered as the final member of the series naphthalene, anthracene, coronene, etc. and the term graphene should therefore be used to designate the individual carbon layers in graphite intercalation compounds.

In the literature graphene has also been commonly referred to as monolayer graphite.

One way to obtain graphene is to exfoliate it, i.e. to peel it off from graphite with an adhesive tape repeatedly. Graphene produced this way is, however, extremely expensive.

Another method is to heat silicon carbide to temperatures above 1100°C to reduce it to graphene. This process produces a sample size that is dependent upon the size of the SiC substrate used. However, again products obtained by this process are still comparatively expensive. Experimental methods have been reported for the production of graphene ribbons consisting of cutting open carbon nanotubes (Nature 2009, 367). Depending on the substrate used (single- or multi-walled nanotubes) single graphene sheets or layers of graphene sheets can be obtained. Recently, a new type of graphene materials, so called nano-graphene platelets or NGP, has been developed and respective products are commercially available, for example from Angstron Materials LLC. NGP refers to an isolated single layer graphene sheet (single layer NGP) or to a stack of graphene sheets (multi-layer NGP). NGPs can be readily mass produced and are available at much lower costs and in larger quantities compared to carbon nanotubes. A broad array of NGPs with tailored sizes and properties can be produced by a combination of thermal, chemical and mechanical treatments.

Typically, without being limited thereto, the stack thickness of NGPs can be as low as 0,34 nm (single-layer NGP) and up to 100 nm or even more (multi-layered NGP). The number of single layers in a NGP can be easily derived from the stack thickness by dividing same by the thickness of a single graphene layer (which is 0.34 nm). Thus, e.g. a NGP with a stack thickness of 2 nm comprises 6 single graphene layers.

The specific surface area of NGPs can vary over a wide range, but is generally higher than the specific surface area of standard graphite when measured under identical conditions. This is an indication of the inherently much finer scale and exfoliation of NGPs. The specific surface area, as measured by the BET method (as described below), preferably exceeds 6 m²/g, more preferably 9 m²/g and even more preferably 12 m²/g and may be as high as exceeding 30 m²/g, preferably exceeding 60 m²/g and even exceeding 90 m²/g. Nanographene platelets having high surface areas, preferably exceeding about 100 m²/g provide often beneficial effects in modulus and barrier properties accompanied by satisfactory nucleation and good antistatic properties when dispersed in polymer compositions in accordance with the instant invention. Details are shown in the examples below. Good results have also been obtained with specific surface areas of less than 40 m²/g, in certain cases as low as below 30 m²/g and in particular with surface areas of up to 20 m²/g. Such products often show a particularly good nucleation and a good ductility (largely preserved or even improved over the neat resin) while barrier properties are not improved to the same extent as with nanographene platelets with surface areas exceeding 100 m²/g.

The content of the electron-conducting additive in the second dispersion can vary over a wide range. It can be of at least 1 wt%, at least 2 wt%, at least 5 wt%, at least 10 wt% or at least 20 wt%, the wt% being either based on the combined weight of the proton-conducting polymer, the electron-conducting additive and the liquid dispersing medium or based on the total weight of the second dispersion. Besides, it can be of at most 60 wt%, at most 50 wt%, at most 35 wt% or at most 25 wt%, the wt% being either based on the combined weight of the proton-conducting polymer, the electron-conducting additive and the liquid dispersing medium or based on the total weight of the second dispersion. The content of the electron-conducting polymer in the second dispersion is preferably of from 2 to 50 wt%, more preferably of from 5 to 35 wt%, and still more preferably of from 15 to 25 wt%, the wt% being either based on the combined weight of the proton-conducting polymer, the electron-conducting additive and the liquid dispersing medium or based on the total weight of the second dispersion.

The content of the electron-conducting additive, either based on the combined weight of the proton-conducting polymer and the electron-conducting additive or based on the total weight of the membrane manufactured by the invented process, ranges usually from 1 to 90 wt%, very often from 2 to 80 wt%, and often from 3 to 70 wt%. In certain embodiments, it can be of at least 5 wt%, at least 10 wt% or at least 20 wt%. In certain other embodiments, the content of the electron-conducting additive, either based on the combined weight of the proton-conducting polymer and the electron-conducting additive or based on the total weight of the membrane manufactured by the invented process, can range from 1 to 30 wt%, from 2 to 60 wt%, from 5 to 50 wt% or from 10 to 30 wt %. After applying the mixing process, membranes can be formed in accordance with processes known to the skilled person and described in the literature.

One example for a suitable process is a method commonly referred to as casting wherein the dispersion obtained after subjecting to ultrasonic treatment or high-speed mechanical agitation is poured into a suitable form or mould and thereafter the temperature is increased to evaporate the one or more liquid substances composing the liquid dispersing medium of the dispersion.

Another suitable process for the manufacture of fluorinated ionomeric membranes is described in EP-A 1 589 062, which is incorporated herein by reference in its entirety. In short said process comprises loading of the ionomeric polymer, in solid or in liquid form, into a mould comprising an arrangement of cylinders, and heating the external surfaces of the mould. Another possibility is to remove the one liquid or more liquid substances composing the liquid dispersing medium from the dispersion and thereafter subjecting the polymeric ionomer to extrusion or injection moulding to obtain sheets or films which can be used as membranes,

It is apparent to the skilled person that the heating conditions have to be appropriately chosen to evaporate or otherwise remove the one or more liquid substances composing the liquid dispersing medium and to obtain the membranes.

The membranes formed in accordance with the process of the present invention show a good purification efficiency for hydrogen combined with good throughput rates.

Another object of the present invention relates to membranes obtainable by and preferably obtained by the process in accordance with the present invention and the use of such membranes for the purification and/or the concentration of hydrogen.

The following examples show the beneficial properties and advantages of the present invention.

### Example 1

The components used were Aquivion^{®} EW-830, an ionomer dispersion with an equivalent weight of 830 g/eq which had been adjusted to a solid content of 35 % by weight, obtained from Solvay Specialty Polymers Italy S.p.A., nano-graphene platelets having a weight average particle diameter of 5 microns obtained from XG Sciences as xGnP^{®} graphene nanoplatelets, and carbon black type Vulcan XC 72 obtained from Cabot Corp. having a density of 264 kg/m³ and a moisture content of less than 1 wt%. The Ultrasonic equipment used was an ultrasonic bath Badelin Sonorex RK 103H from Bandelin providing an energy input of 640 W (2 * 320 W) at a frequency of 35 kHz and a maximum volume of the bath of 4500 ml. Alternatively, an ultrasonic tip device Hielscher UP 400S was used providing 400 W at 24 kHz and a volume of 100 ml.

The membranes were prepared according to the following general procedure:

The preparation of the dispersion was obtained by sequential addition, under stirring, of isopropanol, n-propanol, triethyl phosphate (TEP) and water to an aqueous dispersion of Aquivion^{®} (solid content: 35% by weight). The final composition of the dispersion was the following:

| | |
|---|---|
| Aquivion^{®} | 15 % w/w |
| Water | 43 % w/w |
| isopropanol | 30 % w/w |
| n-propanol | 7 % w/w |
| TEP | 5 % w/w |

The dispersion thus obtained was stirred for one hour.

15 g of the nano-graphene platelets (as the electron-conducting additive) were gradually added as the electron-conducting additive to 50 g of the above dispersion and the mixture was stirred for one hour. Thereafter, the product obtained was subjected to the ultrasonic treatment for one hour at room temperature.

Thereafter a film with a thickness of 0.3 mm was prepared by casting the dispersion on a glass support and the liquid dispersing medium was evaporated in an oven by heating up from 50 °C to 190°C within a period of five hours, keeping at 190 °C for 30 min. and thereafter the dispersion was allowed to cool in the oven to room temperature.

The membrane was activated by immersion of a 13 % solution of nitric acid for one hour and then washed with bi-distilled water until neutral pH. The tests were carried out in a single fuel cell test system from Fuel Cell Technologies. The membrane was assembled with two commercial electrodes (BASF LT 250EW, containing 0.5 mg/cm² of platinum catalyst (comprising 30 wt% of Pt in Vulcan XC 72)). The active area (25 cm²) of the assembly (30 wt% of Pt supported in Vulcan XC-72) was in contact with a triple serpentine pattern of 1 mm ribs on both anode and cathode sides for feeding and discharge of gases.

The membrane was tested by supplying hydrogen and nitrogen under a pressure of 200 and 500 kPa and at temperatures of 35 and 75 °C. The hydrogen flux observed was 0.5 ml/min and 1.5ml/min respectively at a pressure of 200 kPa and 500 kPa and a temperature of 35 °C and could be increased by raising the temperature to 75 °C. No nitrogen flux could be detected under the same conditions.

When just replacing weight pro weight half of the nano-graphene platelets by the carbon black (otherwise said, when using as the electron-conducting additive 7.5 g of the nano-graphene platelets and 7.5 g of the carbon black instead of 15 g of the nano-graphene platelets), all other ingredients and experimental conditions being kept unchanged, the hydrogen flux increased to 1,5 ml/min at 200 kPa and 32 °C and 3 ml/min respectively when increasing the pressure to 500 kPa.

The respective values at 75 °C were 3,5 ml (200 kPa) and 6.5 ml (500 kPa). In the latter case, a small nitrogen flux of 0.17 ml/min was observed.

### Example 2 - Comparative Example

Example 1 with the carbon black was repeated with the exception of the ultrasonic treatment, which was substituted by a magnetic stirring which was applied to the carbon black containing solution for 30 minutes.

The membrane thus obtained (thickness 0.3 mm) was tested at 35 °C by supplying hydrogen and nitrogen under a pressure of 200 kPa and 500 kPa. The hydrogen flux was 0.07 ml/min at 200 kPa and 0.15 ml/min at 500 kPa. At a nitrogen pressure of 500 kPa, the nitrogen flux was 0.1 ml/min, i.e. nearly as high as the hydrogen flux. This shows the significantly lower selectivity of the mambranes obtained in accordance with the comparative process.

## Claims

1. A process for the manufacture of a membrane suitable for the purification of hydrogen, said membrane comprising at least one proton-conducting polymer and at least one electron-conducting additive, wherein :
- a first dispersion comprising a liquid dispersing medium and, dispersed therein, the proton-conducting polymer, is provided,
- the electron-conducting additive is provided,
- the first dispersion and the electron-conducting additive are mixed together,
- the first dispersion and the electron-conducting additive, while being mixed together and/or after having been mixed together, are subjected to at least one treatment chosen from an ultrasonic treatment and a high-speed mechanical agitation, so as to prepare a second dispersion comprising the liquid dispersing medium and, dispersed therein, the proton-conducting polymer and the electron-conducting additive, then
- the second dispersion is formed into the membrane upon removal of the liquid dispersing medium.

2. The process of claim 1 wherein the proton-conducting polymeric dispersion comprises a fluorine containing polymer.

3. The process of claim 2 wherein the fluorine containing polymer is selected from fluorinated polymers having a polyperfluoro backbone with side chains comprising sulfonic acid groups.

4. The process of claim 3 wherein a sulfonated tetrafluoroethylene based fluoropolymer-copolymer having perfluorovinyl ether groups terminated with sulfonate groups is used as fluorine containing polymer.

5. The process of claim 2 wherein a short side chain copolymer of tetrafluoroethylene and a sulfonyl fluoride vinyl ether is used as fluorine containing polymer.

6. The process of any of claims 1 to 5 wherein the electron-conducting additive includes carbon black, graphite or a graphene material.

7. The process of claim 6 wherein nano-graphene platelets are used as the electron-conducting additive.

8. The process of claim 6 wherein a mixture of carbon black and of nanographene platelets is used as the electron-conducting additive.

9. Membranes obtainable by the process of any of claims 1 to 8.

10. Use of ultrasonic treatment or high intensity mechanical agitation for improving the dispersion of electron-conducting additives in proton-conducting polymeric dispersions.

11. Use of the membranes in accordance with claim 9 or manufactured by the process according to any of claims 1 to 8 for the purification or concentration of hydrogen.
